# EUROPÄISCHE PATENTANMELDUNG

(11) **EP 2 725 695 A1**
(43) Veröffentlichungstag der Anmeldung: **30.04.2014**
(21) Anmeldenummer: 12189930.6
(22) Anmeldetag: 25.10.2012
(51) Int. Cl.: H02M 3/335

(54) **DC/DC Wandler mit galvanischer Trennung**

(71) Anmelder: DELPHIN Technology AG, 51427 Bergisch Gladbach (DE)
(72) Erfinder: Renner, Peter, 51515 Kürten (DE); Pauli, Hannes, 51674 Wiehl (DE)
(74) Vertreter: Lippert, Stachow & Partner

(57) **Zusammenfassung**

Die Erfindung betrifft ein Gerät, umfassend mehrere gesteuerte und galvanisch entkoppelte DC/DC Wandler, wobei eine zentrale Steuereinheit alle Wandler steuert.

## Beschreibung

Bei der Erfindung handelt es sich um DC/DC Wandler mit galvanischer Trennung.

Solche DC/DC Wandler werden zur Erzeugung von Gleichspannungen eingesetzt, wobei die Sekundär- oder Ausgangsseite des Wandlers von der Primär- oder Eingangsseite galvanisch entkoppelt ist. Weiterhin kann die sekundäre Spannung oder Ausgangsspannung einen anderen Wert aufweisen als die Primärseite.

Solche galvanisch entkoppelte DC/DC Wandler werden vor allem benötigt, um sogenannte Erdschleifen zu vermeiden. Solche Erdschleifen können zwischen der Eingangsseite und der Ausgangseite auftreten und zwischen den durch die einzelnen DC/DC Wandler gespeisten elektronischen Schaltungsteilen. DC/DC Wandler werden innerhalb eines elektronischen Gerätes in einer nennenswerten Anzahl benötigt, da die unterschiedlichen aktiven Bauelemente unterschiedliche Versorgungsspannungen benötigen. Diese unterschiedlichen Versorgungsspannungen müssen fallweise galvanisch entkoppelt sein, um Erdschleifen zu vermeiden.

Dem Entwicklungsingenieur stehen handelsübliche DC/DC Wandler als fertige Bausteine zur Verfügung. Diese handelsüblichen DC/DC Wandler enthalten in der Hauptsache auf der Primärseite eine Steuereinheit, einen Zerhacker und eine Glättung. Auf der sekundären Seite enthalten Sie im Minimum eine Gleichrichtung und eine Filterung. Die Verbindung zwischen der primären und sekundären Seite erfolgt durch einen Trafo, der für die galvanische Entkopplung maßgebend ist.

Trotzt der geforderten Miniaturisierung haben diese Bauteile einen erheblichen Platzbedarf. Zudem ist der Kostenanteil an den Gesamtkosten der nötigen Bauteile eines elektronischen Gerätes nicht unbeträchtlich.

Die Erfindung hat sich zur Aufgabe gestellt diese Mängel zu beseitigen. Dies geschieht erfindungsgemäß dadurch, dass die Steuereinheit, die für jeden der DC/DC Wandler vorhanden ist, durch eine zentrale Steuereinheit für alle in dem Gerät benötigten DC/DC Wandler ersetzt wird.

Ein weiterer Erfindungsgedanke ermöglicht es, dass alle anderen Bauteile der DC/DC Wandler (außer der Steuereinheit) als diskrete Bauelemente auf der an sich vorhandenen gedruckten Schaltung des Gerätes platziert werden.

Ein weiterer Erfindungsgedanke sieht vor, dass die Steuereinheit in einem an sich vorhandenem FPGA-Baustein integriert wird, wobei hierfür nur drei Anschlüsse des FPGA Bausteins für alle DC/DC Wandler erforderlich sind.

Ein weiterer Erfindungsgedanke ermöglicht es, dass mittels einer Steuerung die Zerhackerfunktion ein- und ausgeschaltet werden kann. Dies hat zur Folge, dass keine Wechselspannung auf der Primärseite des Trafos erzeugt wird, wodurch die Sekundärseite keine Spannung mehr erhält, wodurch die nachgeschaltete elektronische Schaltung abgeschaltet wird und in einen Sleep-Modus fällt. Dies kann zum Stromsparen ausgenutzt werden.

Im folgendem ist die Erfindung anhand eines Ausführungsbeispiels unter Bezugnahme auf die beiliegenden Figuren beschrieben.

Figur 1 zeigt wie die zentrale Steuerung und der Sleep-Modus arbeitet. Die Figur 1 zeigt eine Ausführungsform mit drei DC/DC Convertern, wobei die DC/DC Converter 32, 33, 34 als Blackboxen dargestellt sind.

Die Steuerung erfolgt durch den FPGA (Field Programmable Gate Array) Baustein 25 in Zusammenarbeit mit den logischen Und-Gattern 26 bis 31, die die Umschaltung zwischen dem Arbeits- und den Sleep-Modus bewirken.

Figur 2 zeigt eine Ausführungsform mit einem DC/DC Converter ausgeführt als Gegentaktwandler. Die Steuerung erfolgt durch den FPGA Baustein 14 in Zusammenarbeit mit den logischen Und-Gattern 18 und 19, die die Umschaltung zwischen dem Arbeits- oder Sleep-Modus bewirken.

### Figur 1

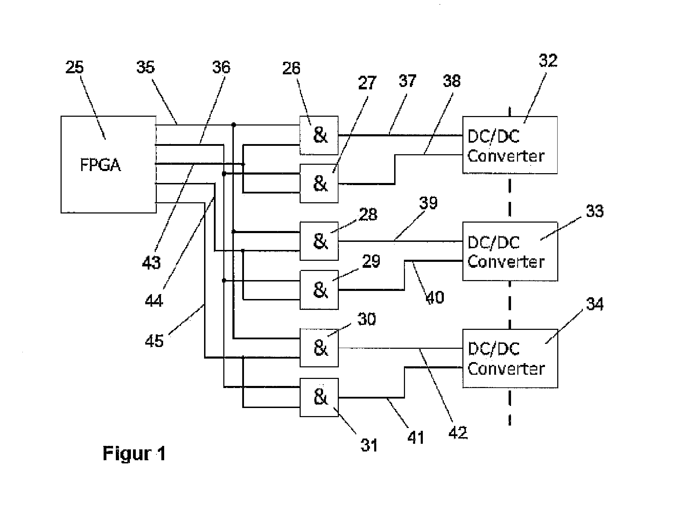

zeigt wie die zentrale Steuerung und der Sleep-Modus arbeitet. Die Figur 1 zeigt eine Ausführungsform mit drei DC/DC Convertern, wobei die DC/DC Converter 32, 33, 34 als Blackboxen dargestellt sind.

Die Steuerung erfolgt durch den FPGA Baustein 25 in Zusammenarbeit mit den logischen Und-Gattern 26 bis 31, die die Umschaltung zwischen dem Arbeits- und den Sleep-Modus bewirken.

Für die Steuerung sind Leitungen 35 und 36 und die Leitungen 43, 44 und 45 vorgesehen.

Die Leitungen 35 und 36 liefern PWM Signale (Impulsweitenmodulierte Signale) von 2 MHZ. Diese Signale werden über die Und-Gatter 26 bis 31 und den Leitungen 37 bis 42 den Eingängen der DC/DC Converter 32 bis 34 zugeführt.

Die PWM Signale liefern die Taktfrequenz, mit der die primärseitigen Eingangsspannungen der DC/DC Converter 32 bis 34 getaktet werden.

Der FPGA 25 bewirkt über die Enableleitungen 43, 44 und 45, dass die Und-Gatter 26 bis 31 alternativ auf High oder Low geschaltet werden, wobei die Und-Gatter 26 bis 31 das PWM Signal entweder durchlassen oder sperren.

Dadurch wird alternativ das PWM Signal an den Eingängen der DC/DC Converter 32 bis 34 zu oder abgeschaltet, wodurch diese selektiv in den Arbeits- oder Sleep-Modus versetzt werden.

### Figur 2

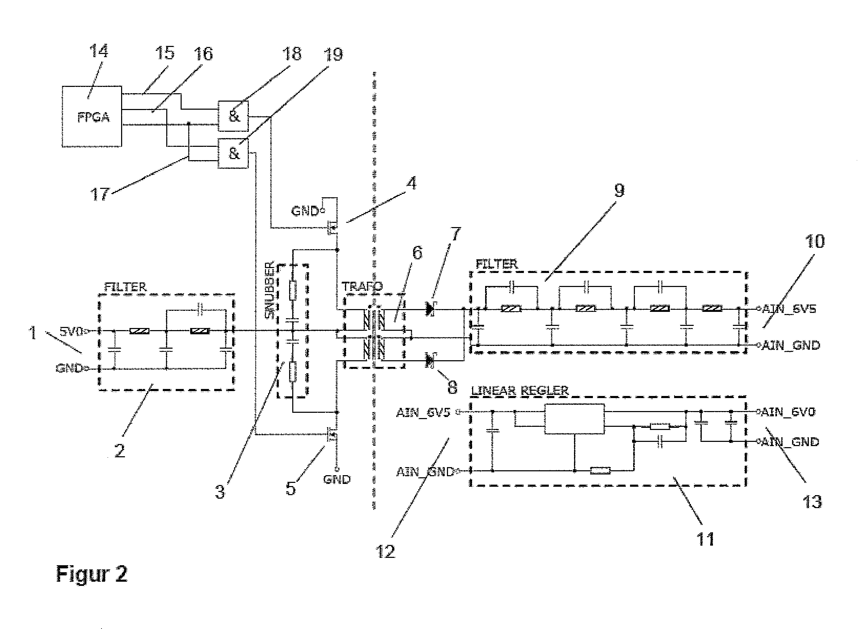

zeigt die Funktion eines DC/DC Converters, ausgeführt als Gegentaktwandler, mit einer zentralen Steuerung durch den FPGA Baustein 14 in Zusammenarbeit mit den logischen Und-Gattern 18 und 19, die die Umschaltung zwischen dem Arbeits- oder Sleep-Modus bewirken. Die weiteren DC/DC Wandler des erfindungsgemäßen Gerätes und deren Anschluss an die zentrale Steuereinheit ist in Figur 2 nicht dargestellt.

Die galvanische Trennung wird durch den Trafo 6 bewirkt. Die Primärspannung wird an den Anschlüssen 1 angelegt. Die galvanisch entkoppelte Sekundärspannung ist an den beiden Anschlusspunkten 13 verfügbar.

Der Block 14 bis 19 sorgt für die Bereitstellung der PWM Signale, mit denen die primäre Gleichspannung zerhackt wird, wodurch in den Primärwicklungen des Trafos 6 eine getaktete Impulsspannung erzeugt wird.

Über die Enable-Leitung 17 werden die Und-Gatter 18 und 19 alternativ auf Durchlass oder Sperren geschaltet.

Wenn die Und-Gatter auf Durchlass geschaltet sind, gelangen die PWM Signale auf die Schalteingänge der elektronischen Schalter 4 und 5, wodurch die Primärspannung gepulst wird. Wenn die Und-Gatter 18 und 19 sperren, werden die Schalter 4 und 5 hochohmig, wodurch die Primärseite des Trafos 6 keine gepulste Spannung mehr erhält, wodurch der DC/DC Wandler in den Sleep-Modus geschaltet wird.

Das Filter 2 dient der Glättung der Primärspannung.

Die Baugruppe 3 ist ein weiterer Filter dessen Aufgabe es ist, hochfrequente Ripple auf der gepulsten Eingangsspannung zu unterbinden.

Auf der sekundären Seite des Trafos 6 sind zwei Schottky Dioden 6 und 7 vorgesehen, die die sekundäre Spannung gleichrichten. Ein weiterer Filter 9 sorgt für eine geglättete Ausgangsspannung an den Klemmen 10.

Die Klemmen 10 sind mit dem Eingang 12 des Linearreglers 11 verbunden. Dieser sorgt für die Spannungsstabilität bei unterschiedlichen Strombelastungen der Ausgangsspannung an den Klemmen 13.

## Patentansprüche

1. Gerät, umfassend mehrere gesteuerte und galvanisch entkoppelte DC/DC Wandler, **dadurch gekennzeichnet, dass** eine zentrale Steuereinheit alle Wandler steuert.

2. Gerät nach Anspruch 1, **dadurch gekennzeichnet, dass** die restlichen Bauelemente der DC/DC Wandler als diskrete Bauelemente auf einer an sich vorhandenen gedruckten Schaltung des Gerätes platziert sind.

3. Gerät nach einem der Ansprüche 1 oder 2, **dadurch gekennzeichnet, dass** die Steuereinheit in einem FPGA-Baustein angeordnet ist.

4. Gerät nach einem der Ansprüche 1 bis 3, **dadurch gekennzeichnet, dass** steuernde Bauelemente angeordnet sind, mit denen eine primäre Spannung eines DC/DC Wandlers ein- und ausschaltbar ist.

5. Gerät nach einem der Ansprüche 1 bis 4, **dadurch gekennzeichnet, dass** auf der Sekundärseite an den Ausgängen der DC/DC Wandler Spannungsstabilisatoren angeordnet sind.
